# DEMANDE DE BREVET EUROPEEN

(11) **EP 2 604 760 A1**
(43) Date de publication de la demande: **19.06.2013**
(21) Numéro de dépôt: 11290577.3
(22) Date de dépôt: 14.12.2011
(51) Int. Cl.: E03B 1/04, E03B 7/04

(54) **Dispositif d'économie d'eau**

(30) Priorité: 12.12.2011 FR 1103798
(71) Demandeur: Financiere de la Mothe, 03290 Dompierre sur Besbre (FR)
(72) Inventeur: David, Christophe, 03290 Dompierre sur Besbre (FR); Askar, Ali, 03800 Gannat (FR)
(74) Mandataire: Célanie, Christian

(57) **Abrégé**

L'invention concerne un dispositif (1) et une installation d'économie d'eau pour un circuit (2) d'alimentation d'un équipement (3) en eau chaude, comprenant un orifice d'entrée (4) alimenté par le circuit d'alimentation (2) et un premier orifice de sortie (5) d'alimentation de l'équipement (3).

Il comprend un deuxième orifice de sortie (6) de récupération de l'eau dans une réserve et une première vanne (7) d'orientation de l'eau vers le premier ou le deuxième orifice de sortie (5, 6), la première vanne (7) étant commandée en position de façon à guider l'eau vers le deuxième orifice de sortie (6) lorsqu'une température détectée de l'eau se trouvant à l'orifice d'entrée est inférieure à une température seuil déterminée.

## Description

Le secteur technique de la présente invention est celui des dispositifs d'alimentation en eau et notamment les dispositifs pour optimiser la consommation en eau.

Il existe différents dispositifs, tels que des dispositifs limitant le débit, pour faire des économies d'eau. On connait aussi différents dispositifs économiques en énergie pour le chauffage de l'eau.

Il demeure cependant un problème pour l'alimentation en eau chaude. Une installation sanitaire fonctionnant avec de l'eau chaude est éloignée du dispositif de chauffage de l'eau et nécessite alors préalablement à son utilisation, l'évacuation de l'eau refroidie présente dans le circuit d'alimentation en eau chaude. Il existe des appareils de chauffage de l'eau fonctionnant au gaz disposés à proximité d'une douche ou d'un robinet d'eau chaude pour une vasque. Mais il est alors nécessaire d'installer un conduit d'alimentation en gaz au même endroit que l'installation sanitaire.

Le but de la présente invention est de pallier un ou plusieurs des inconvénients de l'art antérieur en fournissant un dispositif d'économie d'eau permettant de ne pas avoir à évacuer avec les eaux usagées, l'eau refroidie du circuit d'alimentation en eau chaude.

L'invention a donc pour objet un dispositif d'économie d'eau pour un circuit d'alimentation d'un équipement en eau chaude, comprenant un orifice d'entrée alimenté par le circuit d'alimentation et un premier orifice de sortie d'alimentation de l'équipement, caractérisé en ce qu'il comprend un deuxième orifice de sortie de récupération de l'eau dans une réserve et une première vanne d'orientation de l'eau vers le premier ou le deuxième orifice de sortie, la première vanne étant commandée en position de façon à guider l'eau vers le deuxième orifice de sortie lorsqu'une température détectée de l'eau se trouvant à l'orifice d'entrée est inférieure à une température seuil déterminée.

Selon une caractéristique de l'invention, la première vanne est commandée en position de façon automatique.

Selon une caractéristique de l'invention, le dispositif d'économie d'eau comprend un module de commande d'un actionneur de la première vanne et un capteur fournissant au module de commande un signal représentatif de la température de l'eau se trouvant à l'orifice d'entrée, cette température étant lue et comparée à la température seuil mémorisée par le module de commande qui transmet à l'actionneur un signal de commande de la première vanne en position de guidage de l'eau vers le deuxième orifice de sortie si la température lue est inférieure à la température seuil.

Selon une caractéristique de l'invention, si la température lue n'est pas inférieure à la température seuil, le module de commande transmet à l'actionneur un signal de commande de la première vanne en position de guidage de l'eau vers le premier orifice de sortie.

Selon une caractéristique de l'invention, le dispositif d'économie d'eau comprend une deuxième vanne de coupure de l'alimentation en eau disposée en amont de l'orifice d'entrée.

Un autre objet de l'invention concerne une installation sanitaire reliée à un circuit d'alimentation en eau chaude, l'installation comprenant un premier équipement sanitaire fonctionnant avec de l'eau chaude et un dispositif d'économie d'eau selon l'invention, l'orifice d'entrée dudit dispositif d'économie d'eau étant alimenté par le circuit d'alimentation en eau chaude, le premier orifice de sortie dudit dispositif d'économie d'eau alimentant le premier équipement sanitaire et le deuxième orifice de sortie dudit dispositif d'économie d'eau alimentant un deuxième équipement sanitaire fonctionnant avec de l'eau froide.

Selon une autre caractéristique de l'invention, l'installation sanitaire comprend en outre un réservoir de récupération des eaux froides intercalé entre le dispositif d'économie d'eau et le deuxième équipement sanitaire, ce réservoir comprenant au moins un orifice d'alimentation en eau froide du deuxième équipement sanitaire.

Selon une autre caractéristique de l'invention, le premier équipement sanitaire est représenté par une douche, une baignoire ou un robinet disposé au-dessus d'une vasque.

Selon une autre caractéristique de l'invention, le deuxième équipement sanitaire est constitué de toilettes ou d'un robinet disposé au-dessus d'une vasque.

Un tout premier avantage de l'invention réside dans le fait que l'eau refroidie se trouvant dans le circuit de distribution d'eau chaude n'est pas souillée et peut être réutilisée. L'eau récupérée peut notamment être propre à la consommation par les êtres humains.

Un autre avantage de l'invention réside dans le fait qu'on évite la perte de l'eau refroidie dans le circuit de distribution d'eau chaude par un dispositif simple à fabriquer et à mettre en oeuvre.

Un autre avantage de l'invention réside dans le fait qu'on peut garder de l'eau chaude en permanence à disposition pour un équipement sanitaire.

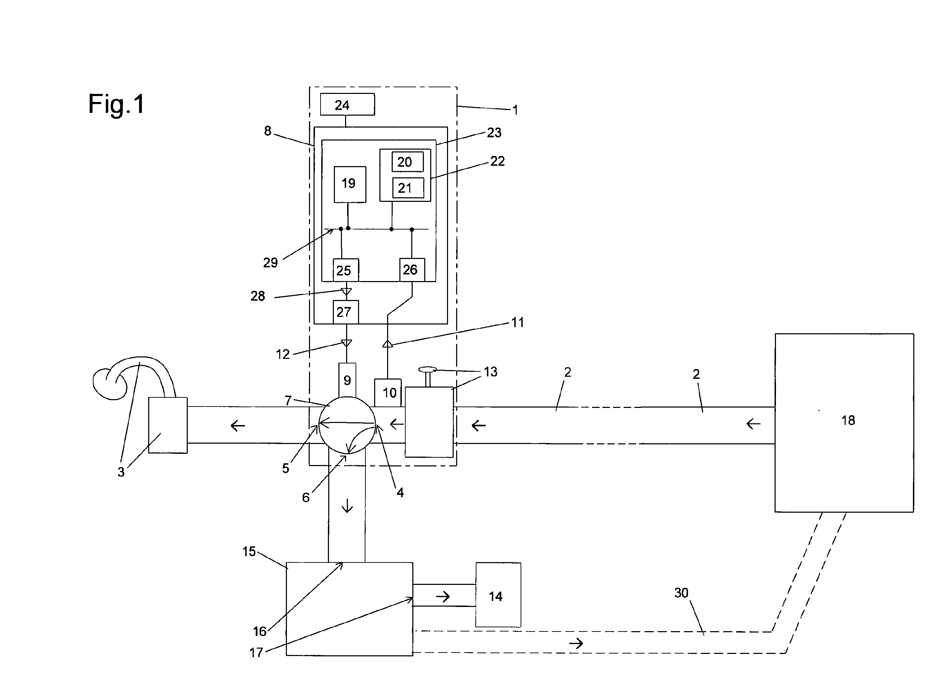

D'autres caractéristiques, avantages et détails de l'invention seront mieux compris à la lecture du complément de description qui va suivre de modes de réalisation donnés à titre d'exemple en relation avec le dessin de la figure 1 qui représente une vue schématique d'un exemple d'installation sanitaire reliée à un circuit d'alimentation en eau chauffée selon l'invention.

L'invention va à présent être décrite avec davantage de détails.

Le dispositif 1 d'économie d'eau est intercalé entre un équipement 3 et son circuit 2 d'alimentation en eau chaude. Le circuit 2 d'alimentation en chaude est lui-même alimenté par un appareil 18 de chauffage de l'eau. Un tel circuit 2 est par exemple installé dans une maison individuelle ou dans un immeuble collectif. L'appareil 18 de chauffage de l'eau peut être alimenté en énergie électrique, en gaz ou en fioul pour chauffer l'eau. L'appareil 18 de chauffage de l'eau peut aussi fonctionner grâce à l'énergie solaire ou grâce à l'énergie géothermique. Cet appareil 18 chauffe l'eau provenant par exemple d'un réseau d'alimentation en eau potable.

Le circuit 2 d'alimentation en eau chaude est représenté avec une partie en pointillé pour indiquer que ce circuit peut être de diverses longueurs.

Un équipement 3 utilisant de l'eau chaude est par exemple une douche, une baignoire ou un robinet disposé au-dessus d'une vasque.

Un autre équipement 14 utilisant de l'eau froide a été représenté. Cet équipement 14 est par exemple constitué par des toilettes dont le réservoir est rempli par de l'eau froide.

On peut aussi réinjecter l'eau en entrée de l'appareil 18 de chauffage de l'eau par un circuit de retour 30 représenté en pointillé.

Le dispositif 1 d'économie d'eau comprend une vanne 7 pouvant orienter l'eau soit vers un ou plusieurs équipements 3 fonctionnant à l'eau chaude, soit vers un ou plusieurs équipements 14 fonctionnant à l'eau froide. Cette première vanne 7 comprend un orifice d'entrée 4 alimenté par le circuit d'alimentation 2, un premier orifice de sortie 5 alimentant l'équipement 3 fonctionnant à l'eau chaude et un deuxième orifice de sortie 6 de récupération de l'eau dans une réserve pour alimenter un équipement fonctionnant à l'eau froide.

La première vanne 7 est positionnée automatiquement. Un actionneur 9 de la première vanne 7 est commandé par un module 8 de commande. Le module de commande sera décrit avec davantage de détails par la suite.

Une deuxième vanne 13 est disposée en amont de la première vanne 7. Cette deuxième vanne 13 ouvre ou ferme l'alimentation en eau provenant du circuit d'alimentation en eau chaude. Cette deuxième vanne 13 est par exemple ouverte ou fermée manuellement. La deuxième vanne 13 alimentée par le circuit 2 d'eau chaude est en communication avec l'orifice d'entrée 4 de la première vanne 7.

On pourrait aussi avoir un circuit 2 d'alimentation en eau chaude directement en communication avec l'orifice d'entrée 4 de la première vanne 7. Dans ce cas, lorsque la sortie vers le réservoir est laissée ouverte, l'eau refroidie est évacuée dès que la température détectée est inférieure à la température seuil déterminée.

Un capteur 10 de température est disposé contre le conduit d'alimentation de l'orifice d'entrée 4 de la première vanne 7. Ce capteur 10 est disposé à une distance déterminée de l'orifice d'entrée 4, de façon à ce que la température mesurée soit représentative de la température du liquide au moment où il passe par cet orifice d'entrée 4. Le capteur 10 est par exemple positionné entre la première vanne 7 et la deuxième vanne 13. Le capteur relié au module de commande 8, lui transmet un signal représentatif de la température mesurée.

La première vanne 7 comprend son deuxième orifice de sortie 6 en communication avec un orifice de remplissage 16 d'un réservoir 15. Le réservoir 15 comprend un orifice 17 d'alimentation en eau froide de l'équipement fonctionnant à l'eau froide.

On peut prévoir plusieurs orifices d'alimentation en eau froide aménagés dans le réservoir 15 pour alimenter plusieurs équipements. Le réservoir 15 alimente par exemple le circuit de retour 30.

On pourrait aussi relier directement le deuxième orifice de sortie 6 de la première vanne 7 à l'équipement 14 fonctionnant à l'eau froide. Cet équipement peut notamment comprendre son propre réservoir.

Le module 8 de commande est alimenté en énergie électrique par un module 24 d'alimentation électrique. Le module 8 de commande comprend un circuit 23 de gestion transmettant un signal de commande 28 à un circuit de puissance 27. Le circuit de puissance 27 est relié électriquement à l'actionneur 9 de façon à pouvoir lui envoyer un signal 12 de commande. Ce signal de commande 12 peut correspondre à une commande d'orientation du flux d'eau vers l'équipement 3 fonctionnant à l'eau chaude ou vers l'équipement 14 fonctionnant à l'eau froide.

Le circuit 23 de gestion comprend un bus 29 de communication relié à un calculateur 19 ainsi qu'à un composant de mémorisation 22. Le calculateur 19 réalise des opérations de lecture et d'écriture en mémoire 22 ainsi que des opérations de contrôle des composants du circuit de gestion.

La mémoire 22 comprend notamment des données représentatives d'un programme 21 de commande de la position de la première vanne 7 en fonction de la température mesurée et comparée à une température seuil 20 mémorisée.

Le bus de communication 29 est par ailleurs relié à une interface 25 de communication avec le circuit de puissance 27. Cette interface 25 fournit un signal de commande 28 au circuit 27 de puissance.

Le bus de communication 29 est relié à une interface analogique-numérique 26 recevant un signal analogique 11 fourni par le capteur 10. Le signal analogique 11 reçu est transformé en données numériques représentatives de la température mesurée.

On peut aussi prévoir un capteur de température tel qu'un capteur de type bilame, fournissant un signal binaire selon que la température mesurée dépasse ou non une température seuil déterminée. La température seuil est alors fonction de la configuration de ce capteur de température.

De cette façon, la première vanne 7 est commandée en position de façon à guider l'eau vers le deuxième orifice de sortie 6 lorsqu'une température détectée de l'eau se trouvant à l'orifice d'entrée est inférieure à une température seuil déterminée.

La récupération de l'eau refroidie est faite automatiquement sans que l'utilisateur ait à vérifier cette température.

Un utilisateur souhaitant prendre une douche ouvre par exemple la deuxième vanne 13. De l'eau sort alors du circuit 2 d'alimentation en eau chaude. L'eau froide détectée à l'entrée de la première vanne est alors orientée automatiquement vers le réservoir 15 et lorsque l'eau arrivant à l'orifice d'entrée 4 est à une température supérieure ou égale la température seuil, la première vanne 7 oriente alors automatiquement l'eau vers la douche. L'utilisateur reçoit alors de l'eau chaude. D'une part, cela évite d'évacuer l'eau refroidie dans les eaux usées malgré que celle-ci n'ait pas été souillée. D'autre part, cela évite à l'utilisateur de recevoir de l'eau froide à la place d'une eau chaude et d'être malencontreusement aspergé d'eau froide.

On peut prévoir de monter le dispositif d'économie d'eau en amont de l'équipement 3 fonctionnant à l'eau chaude ou le dispositif d'économie d'eau peut être une composante de la structure formant cet équipement 3.

On peut aussi intégrer un réservoir 15 de récupération des eaux froides à la structure formant l'équipement 3 fonctionnant à l'eau chaude.

Il doit être évident pour l'homme du métier que la présente invention permet d'autres variantes de réalisation. Par conséquent, les présents modes de réalisation doivent être considérés comme illustrant l'invention définie par les revendications jointes.

## Revendications

1. Dispositif (1) d'économie d'eau pour un circuit (2) d'alimentation d'un équipement (3) en eau chaude, comprenant un orifice d'entrée (4) alimenté par le circuit d'alimentation (2) et un premier orifice de sortie (5) d'alimentation de l'équipement (3), **caractérisé en ce qu'**il comprend un deuxième orifice de sortie (6) de récupération de l'eau dans une réserve et une première vanne (7) d'orientation de l'eau vers le premier ou le deuxième orifice de sortie (5, 6), la première vanne (7) étant commandée en position de façon à guider l'eau vers le deuxième orifice de sortie (6) lorsqu'une température détectée de l'eau se trouvant à l'orifice d'entrée est inférieure à une température seuil déterminée.

2. Dispositif (1) d'économie d'eau selon la revendication 1, **caractérisé en ce que** la première vanne (7) est commandée en position de façon automatique.

3. Dispositif d'économie d'eau selon la revendication 1 ou 2, **caractérisé en ce qu'**il comprend un module de commande (8) d'un actionneur (9) de la première vanne (7) et un capteur (10) fournissant au module de commande (8) un signal (11) représentatif de la température de l'eau se trouvant à l'orifice d'entrée, cette température étant lue et comparée à la température seuil mémorisée (20) par le module de commande (8) qui transmet à l'actionneur (9) un signal de commande de la première vanne en position de guidage de l'eau vers le deuxième orifice de sortie (6) si la température lue est inférieure à la température seuil.

4. Dispositif d'économie d'eau selon la revendication 3, **caractérisé en ce que** si la température lue (11) n'est pas inférieure à la température seuil, le module de commande (8) transmet à l'actionneur (9) un signal de commande de la première vanne (7) en position de guidage de l'eau vers le premier orifice de sortie (5).

5. Dispositif d'économie d'eau selon l'une des revendications précédentes, **caractérisé en ce qu'**il comprend une deuxième vanne (13) de coupure de l'alimentation en eau disposée en amont de l'orifice d'entrée (4).

6. Installation sanitaire reliée à un circuit d'alimentation en eau chaude (2), l'installation comprenant un premier équipement sanitaire (3) fonctionnant avec de l'eau chaude et un dispositif (1) d'économie d'eau selon l'une des revendications 1 à 5, l'orifice d'entrée (4) dudit dispositif (1) d'économie d'eau étant alimenté par le circuit d'alimentation en eau chaude (2), le premier orifice de sortie (5) dudit dispositif (1) d'économie d'eau alimentant le premier équipement sanitaire (3) et le deuxième orifice de sortie (6) dudit dispositif (1) d'économie d'eau alimentant un deuxième équipement sanitaire (14) fonctionnant avec de l'eau froide.

7. Installation sanitaire selon la revendication 6 comprenant en outre un réservoir (15) de récupération des eaux froides intercalé entre le dispositif d'économie d'eau et le deuxième équipement sanitaire, ce réservoir (15) comprenant au moins un orifice (17) d'alimentation en eau froide du deuxième équipement sanitaire (14).

8. Installation sanitaire selon la revendication 6 ou 7, **caractérisé en ce que** le premier équipement (3) sanitaire est représenté par une douche, une baignoire ou un robinet disposé au-dessus d'une vasque.

9. Installation sanitaire selon l'une des revendications 6 à 8, **caractérisé en ce que** le deuxième équipement (14) sanitaire est constitué de toilettes ou d'un robinet disposé au-dessus d'une vasque.
